# FASCICULE DE BREVET EUROPEEN

(11) **EP 1 083 251 B1**
(45) Date de publication et mention de la délivrance du brevet: **23.11.2005**
(21) Numéro de dépôt: 00500123.5
(22) Date de dépôt: 13.06.2000
(51) Int. Cl.: D03D 15/02, E04C 2/42

(54) **Tissu metallique et procédé de fabrication**
Metallgewebe und Verfahren zur Herstellung
Metallic fabric and method of manufacturing

(30) Priorité: 07.09.1999 ES 9902000
(43) Date de publication de la demande: 14.03.2001
(73) Titulaire: Trenzametal, S.L., 49006 Zamora, Zamora (ES)
(72) Inventeur: Bermejo Sotillo, Miguel A., 49006 Zamora (ES); Roman Alonso, Benito, 49006 Zamora (ES)
(74) Mandataire: Manzano Cantos, Gregorio

(56) Documents cités:
- US-A- 1 593 218
- US-A- 1 878 688
- US-A- 4 270 333

## Description

### OBJET DE L'INVENTION

La présente invention, selon il est exprimé dans l'exposé de ce mémoire descriptif, concerne un tissu métallique conçu et réalisé afin d'obtenir de nombreux et de remarquables avantages par rapport à d'autres moyens existants ayant des fins analogues, grâce à leurs caractéristiques spécifiques et un procédé de fabrication aussi spécifique de ce produit.

Ce tissu métallique, éventuellement appelé grillage, fournit en pans ou plaques rigides, étant donné leur robustesse et la résistance à la rupture ou à la déformation, est prévu et spécialement approprié pour son utilisation dans l'industrie du bâtiment pour des clôtures verticales d'enceintes et de baies, et en tant que matériel pour l'élaboration de jalousies, de grillages, de balustrade, de grille, etc.

Le tissu métallique auquel nous faisons référence, objet de cette invention est composé, aussi bien dans le sens de la chaîne que de la trame, de barres métalliques massives de 120 mm² de section minimale et un poids supérieur ou égal à 940 grammes par mètre courant, en formant des pans ayant un poids supérieur ou égal à 15 kg/m², et il est fabriqué industriellement et par des moyens nouveaux et spécifiques en entrelaçant et en tressant lesdites barres entre elles, selon la manière de base de la chaîne et de la trame dans un tissu normal, et sans aucune autre manipulation préalable ni postérieure à l'opération de tissage, sauf leur découpage selon les mesures appropriées.

### ANTÉCEDENTS DE L'INVENTION

On connaît beaucoup de types de toiles, treillis, trames, grilles et grillages métalliques destinées à la clôture d'enceintes, de baies, et autres. Dans ce sens-ci, on peut mentionner ceux de type noué et ceux de type à torsion simple ou triple, généralement faits avec du fil métallique; aussi les mailles électrosoudées élaborées avec des tiges et des tôles, ou celles obtenues en perçant une tôle métallique. Il y au aussi d'autres toiles métalliques élaborées par des fil métalliques fins normalement fournis en bobineau, bobine ou ensouples, utilisés en tant que cribles ou en tant que protection contres les insectes, généralement très souples, élaborées avec des matériaux faiblement rigides et de section faible, fabriquées selon les techniques classiques dans l'industrie textile.

Toutes ces variétés de mailles, grillages et toiles métalliques ont pour objet la protection et la clôtures de baies ou d'enceintes mais ils se distingues remarquablement les uns des autres en ce qui concerne les propriétés spécifiques de chacun, aussi bien entre eux que par rapport à l'objet de cette invention, raison par laquelle nous ne considérons pas nécessaire son explication.

Ceux étant plus en rapport avec l'objet de cette invention sont ceux sous forme de tissu où la maille est obtenue par entrelacement de fils métalliques ou de tiges rondes de fer ou acier, mais qui au préalable, tel que signalé_le US-A 4 270 333 (SINGER RICHARD M ET AL) du rapport de recherche dans le que, aussi bien celles appartenant à la chaîne que celles appartenant à la trame ont une forme nettement ondulante, obtenu par déformation d'après un procédé préalable à l'opération de tissage sur laquelle chaque onde agit en tant que "boîte", pour l'emboîtement de celles-ci, celles-de la chaîne avec celles de la trame. Il en résulte, par conséquent, un tissu inerte où les fils, fils métalliques, ou tiges sont auto-maintenus par enclenchement de position sur les ondulations réalisées à cet effet, en leur donnant un aspect très caractéristique qui les distingue d'un tout autre type.

Ledit tissu, outre la distinction remarquable de celui revendiqué par ce brevet, du fait qu'il est élaboré à partir de tiges ondulées, constitue un type très caractéristique de treillis métallique connu commercialement comme "grillage ondulé"; et il présente l'inconvénient d'ajouter des opérations à la simple opération de tisser, car avant de les entrelacer, il faut conférer au fils métalliques les formes ondulées appropriées pour qu'ils se maintiennent postérieurement dans une position stable sur le tissu et que celui-ci ne perde pas sa régularité. Ce type de tissu est aussi caractérisé en ce qu'il se limite à des tiges de section ronde.

### DESCRIPTION DE L'INVENTION

Le tissu de l'invention présente une structure commune à celles de ce type-ci, celles composées par des tiges ou des fils métalliques entrelacés ou tressés, comme il est décrit ci-dessus, mais il est élaboré par des matériaux métalliques de section accrue, ronde ou rectangulaire, que l'on peut aussi appeler platines, feuillards, carres massives, ronds massifs ou d'une façons génériques des barres, et il est basé sur l'utilisation des différentes propriétés principales pour le maintien et la stabilisation des éléments constitutifs, grâce auxquelles on réussit à faire d'une façon très efficace et simple que les barres métalliques tissées se maintiennent entrelacées, fermes et stables à leur position, en formant un pan plat et rigide ayant une grande résistance à la déformation, au moyen d'un procédé simple de fabrication consistant à tisser ou entrelacer par des moyens mécaniques les barres correspondantes à la chaîne avec celles de la trame sans aucune autre préparation, sans opération préalable ni postérieure, sauf le découpage des barres à la mesure appropriée. Pour cela le système est basé sur la correcte utilisation du caractère élastique de l'acier, l'élasticité des barres métalliques avec lesquelles on tisse, c'est à dire la résistance à la flexion, en les fléchissant et en les forçant à demeurer sous tension une fois unies entre elles, cette tension étant suffisante afin de les maintenir unies entre elles et d'éviter mutuellement le déplacement par rapport à leur position d'origine sur le tissu. Cet objectif d'auto-maintien des éléments au moyen de la tension active sans soudure et pour le but prévu, c'est à dire l'élaboration d'une maille de grande résistance, est atteint par le tissu objet de cette invention en forçant la chaîne et la maille à fléchir les degrés précis pour un tel effet, au même moment d'être tissées, en arrivant aux points où elles se croisent à la zone élastoplastique. Grâce à cela, les barres absorbent et stockent de l'énergie de flexion en essayant de retourner à leur position d'énergie minimale, ce qui est spécialement efficace sur les mailles objets de cette invention, caractérisées en ce qu'elles pèsent plus de 15kg par m², en utilisant des barres métalliques de plus de 120 mm² de section et plus de 940 g par mètre courant.

On réussit, par conséquent, dans ce type de tissu industriel à appliquer par l'intermédiaire de moyens mécaniques une forme de maintien très simple et efficace des éléments qui l'intègrent et qui permet de fabriquer sans aucune complication des treillis ou des grillages beaucoup plus robustes que ceux fabriqués jusqu'à présent par des moyens mécaniques ou industriels et qui les font spécialement appropriés à cet fin; l'application dans l'industrie du bâtiment en tant que protection et clôture de baies, d'enceintes et en tant que matériel pour l'élaboration de jalousies, de grillages, de grilles ou de balustrade spécialement robustes et résistantes.

Pour compléter la suivante description, et afin d'aider à une meilleure compréhension des caractéristiques de l'invention, une feuille de plans accompagne le présent mémoire descriptif.

### DESCRIPTION ABRÉGÉE DES DESSINS

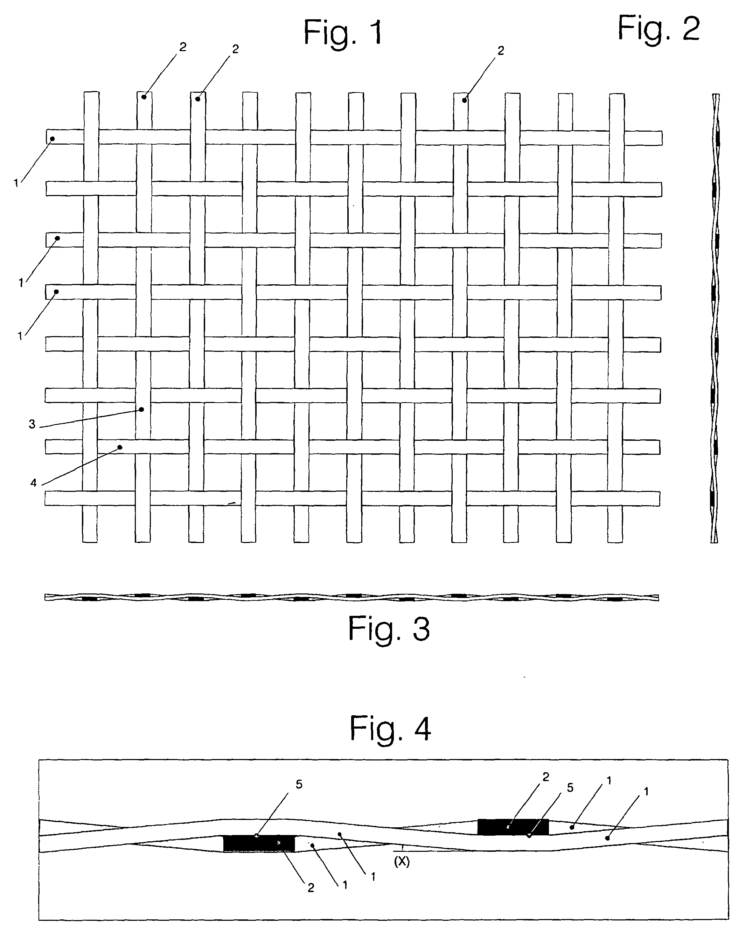

Figure 1.- Elle montre une vue perpendiculaire au plan du pan tissé
Figure 2.- Elle montre une section perpendiculaire au sens du tissu et parallèle à la chaîne.
Figure 3.- Elle montre une section perpendiculaire à la chaîne et parallèle au sens de la trame.
Figure 4.- Elle montre un détail de vue latérale ou section.

### DESCRIPTION D'UNE FORME DE RÉALISATION PRÉFÉRÉE

D'après les figures, on peut observer que les barres constituant la trame (1) se serrent contre celles qui se croisent de la chaîne (2), en même temps qu'elles dévient leur course en décrivant toutes deux une ligne brisée (3 et 4) respectivement et sensiblement identiques entre elles, débouchant sur des plans de serrage réciproque où coïncident lesdites lignes brisées, en marquant un angle de cintrage (x) calculé pour que les barres soient maintenues sous tension sans arriver à le déformation totale permanente.

Étant donné que les barres n'ont pas été déformées, elles tendent à retourner à leur forme droite une fois tissées, et elles conservent une grande partie de la tension générée lors de l'application de la force nécessaire pour leur fléchissement au moment de tisser, grâce à l'élasticité du métal, et comme il est connu cela dérive desdites propriétés, c'est à dire, l'élasticité et la résistance que le matériel oppose à la déformation. Les barres conservent par conséquent la plupart de la force ou énergie appliquée sur le fléchissement si celui-ci ne dépasse pas un certain angle, car dans ce cas-ci elles seraient pliées (déformées en permanence) comme dans le cas de plies appliqués aux extrémités et à nouveau inertes, en perdant la propriété utilisée caractéristique par cette invention et qui fait que ce tissu soit une nouvelle modalité ayant des qualités différentes à ceux déjà existants pour la même fin.

## Revendications

1. TISSU MÉTALLIQUE qui tout en étant du type de ceux ayant une forme et une structure de treillis métallique et qui étant donné leur envergure et leur résistance sont utilisés lors de la fabrication de grilles, dans des clôtures de bâtiments, des baies, des enceintes, des balcons en pouvant éventuellement prendre le nom de grillage est **CARACTÉRISÉ en ce que** le tamis ainsi obtenu est constitué par un treillis de barres de plus de 120 mm2 de section polygonale et de plus de 940g par mètre courant formant un pan rigide de plus de 15 kg par m², **en ce que** les barres constituant la trame (1) sont serrées contre celles qui les croisent (5) de la chaîne (2), et **en ce que** les barres de trame et de chaîne dévient de leur course en décrivant une ligne brisée (3-4) présentant un angle de cintrage (x) calculé pour que les barres (1-2) ne soient pas complètement déformées de manière que celles-ci absorbent et stockent de l'énergie de flexion, raison pour laquelle elles essaient de retourner à leur position d'origine d'énergie minimale.

2. PROCÉDÉ DE FABRICATION du tissu métallique de la revendication 1 réalisé industriellement au moyen de machines automatiques spécifiques, **CARACTÉRISÉ en ce que** le tissu métallique est réalisé en entrelaçant ou en tressant des barres métalliques (1-2) en les faisons fléchir aux croisements (5) de la trame et de la chaîne d'un angle (x) tel que l'on arrive à la zone élastoplastique du materiau, en formant ainsi un pan rigide très résistant à la déformation.

## Patentansprüche

1. Metallgewebe, welches eine Form und Struktur eines Metallgitters aufweist und aufgrund seines Ausmaßes und seiner Festigkeit bei der Herstellung von Gattern, Umzäunungen von Gebäuden, Feldern, Geländen, Balkonen eingesetzt wird, wobei es gegebenenfalls als Gatter bezeichnet werden kann, **dadurch gekennzeichnet, dass** das auf dieser Weise erhaltene Maschengewebe aus einem Gitter aus Stäben besteht, das einen vieleckigen Querschnitt von mehr als 120 mm² und ein Gewicht von mehr als 940 g pro laufenden Meter aufweist und einen starren Verband von mehr als 15 kg pro m² bildet, dass die Schussstäbe (1) gegen die durchkreuzenden (5) Kettstäbe (2) gedrückt werden, und dass die Schussstäbe und die Kettstäbe von ihrem Weg abweichen indem sie eine unterbrochene Linie (3-4) bilden, die einen Krümmungswinkel (x) aufweist, der derart berechnet ist, dass die Stäbe (1-2) nicht vollständig deformiert werden, so dass diese die Biegungsenergie aufnehmen und speichern, weshalb sie die Tendenz haben, in ihre Ausgangsposition mit Mindestenergie zurückzukehren.

2. Verfahren zur Herstellung eines Metallgewebes nach Anspruch 1, das industriell mit spezifischen, automatisch arbeitenden Maschinen durchgeführt wird, **dadurch gekennzeichnet, dass** das Metallgewebe durch Verschlingen und Verflechten von Metallstäben (1-2) hergestellt wird, wobei diese an den Kreuzungen (5) der Schuss- und Kettstäbe mit einem Winkel (x) gebogen werden, so dass der elastoplastische Bereich des Materials erreicht wird wobei auf dieser Weise ein starrer Verband entsteht, der eine hohe Formbeständigkeit aufweist.

## Claims

1. A metallic cloth which, being of the type having a metallic lattice work shape and structure and which, given its span and resistance, is used during grate manufacture, in fences for buildings, bays, enclosures, balconies, optionally being able to adopt the name screen, **characterized in that** the wire mesh thus obtained is made up of a grid of bars of more than 120 mm² of polygonal section and more than 940 g per linear meter forming a rigid lattice work of over 15 kg per m², **in that** the bars making up the weft (1) are tightened against those bars (5) of the warp (2) intersecting them, and **in that** the weft and warp bars deviate from their path, defining a broken line (3-4) having a camber angle (x) calculated so that the bars (1-2) do not become completely strained so that they absorb and store the bending energy, for which reason they try to return to their starting minimum energy position.

2. A process of manufacturing the metallic cloth of claim 1, carried out industrially by means of specific automatic machines, **characterized in that** the metallic cloth is carried out by weaving or braiding metal bars (1-2), making them bend at the intersections (5) of the weft and the warp with angle (x) such that the elastoplastic area of the material is reached, thus forming a very rigid strain-resistant lattice work.
